# FASCICULE DE BREVET EUROPEEN

(11) **EP 0 524 070 B1**
(45) Date de publication et mention de la délivrance du brevet: **09.02.2000**
(21) Numéro de dépôt: 92401996.1
(22) Date de dépôt: 09.07.1992
(51) Int. Cl.: G06F 13/12

(54) **Dispositif universel de couplage d'un bus d'ordinateur à un contrôleur d'un groupe de périphériques**
Universelle Koppeleinrichtung zwischen einem Rechnerbus und einer Steuereinheit einer Gruppe von Periphergeräten
Universal coupling device between a computer bus and a controller of a group of peripherals

(30) Priorité: 15.07.1991 FR 9108908
(43) Date de publication de la demande: 20.01.1993
(73) Titulaire: BULL S.A., 92800 Puteaux (FR)
(72) Inventeur: Pardillos, Jacky, F-78370 Plaisir (FR); Ravaux, Paul, F-78340 Les Clayes sous Bois (FR)
(74) Mandataire: Colombe, Michel

(56) Documents cités:
- COMPUTER COMMUNICATIONS REVIEW vol. 18, no. 4, 16 Août 1988, NEW YORK US pages 175 - 187 KANAKIA & CHERITON 'The VMP Network Adapter Board (NAB): High-Performance Network Communication for Multiprocessors'
- EUROMICRO 88 SYMPOSIUM ON MICROPROCESSING AND MICROPROGRAMMING vol. 24, no. 1-5, 29 Août 1988, ZURICH, SUISSE pages 503 - 509 HERSCH ET AL 'The Video-RAM Multiprocessor Architecture'
- COMPUTER TECHNOLOGY REVIEW vol. 10, no. 14, Novembre 1990, LOS ANGELES US pages 37 - 39 HSU & GREENFIELD 'The Fiber Distributed Data Interface Emerges as 100 Mbps LAN Solution'

## Description

La présente invention concerne un dispositif universel de couplage d'un bus d'ordinateur à un contrôleur d'un groupe de périphériques qui sont reliés entre eux par une liaison spécifique à laquelle le contrôleur est relié physiquement. Elle est plus particulièrement applicable à un groupe de périphériques ou terminaux qui sont reliés entre eux par un réseau de transmission de données en forme d'anneau de type FDDI, dont le support de transmission est constitué par des fibres optiques. Elle est également applicable à un groupe de périphériques reliés entre eux par une liaison caractéristique de ceux-ci, par exemple une liaison de type SCSI qui relie des mémoires à disques magnétiques.

Les réseaux de transmission de données utilisant comme support de transmission les fibres optiques, sont utilisés de plus en plus fréquemment et sont définis dans leurs grandes lignes dans les documents élaborés dans les comités de standardisation internationaux tel que l'ANSI (American National Standard Institute), sous la référence X3T9-5. Ces normes définies par l'ANSI sont également adoptées par l'I.S.O., organisation internationale de normalisation (International standard organization). Cette norme définit un ensemble de caractéristiques physiques et électriques du réseau, par exemple la longueur totale maximale de la fibre, la distance maximale entre stations du réseau, ainsi que le code dans lequel sont écrites et transmises les informations d'une station à l'autre. L'un des nombreux avantages de l'utilisation de fibres optiques dans les réseaux est la valeur élevée des débits de transmission obtenus, à savoir de l'ordre de 100 Mbits/s.

De même les liaisons de type SCSI sont définies par des normes aussi bien à l'ANSI qu'à l'I.S.O.

On sait que sur un réseau, les messages d'informations émis par les différentes stations sont constitués d'une pluralité de trames. La trame est donc le message individuel et est structurée, comprend un message de début et un message de fin, des signaux de synchronisation pour en déduire l'horloge, l'adresse de la station à laquelle est destinée le message, l'adresse de la station émettrice, la longueur des données, les données utiles, etc. De manière simplifiée, on peut dire qu'une trame est constituée de données utiles qui sont encadrées, dans le temps, par des signaux placés en tête de trame et par des signaux placés en queue de trame. Les signaux placés en tête et en queue de trame, qui encadrent les données utiles sont appelés "caractères de commande".

Par ailleurs, on sait que l'ensemble des éléments constitutifs fonctionnels constituant un ordinateur, qu'il s'agisse des processeurs le constituant (Processeur central ou processeurs d'entrée/sortie), des mémoires vives et des mémoires mortes, des contrôleurs d'entrée/sortie ou des contrôleurs de périphériques est disposé sur un ensemble de cartes (boards) dont les dimensions sont normalisées. Ces cartes sont reliées généralement à un même bus de type parallèle qui assure les communications entre les différents processeurs, le transport des données entre les cartes et l'alimentation électrique de celles-ci.

Le bus communément appelé MULTIBUS II (Marque déposée par la Société INTEL), est l'un de ceux les plus couramment utilisés. Son architecture est structurée autour d'un bus principal de type parallèle, qui est normalisé suivant la norme IEEE 1296 ( Institute of Electrical and Electronic Engineers), et est communément appelé PSB (ce qui signifie Parallel System Bus ).

Un tel bus d'ordinateur est relié à la dite liaison spécifique (réseau FDDI, ou liaison SCSI) par l'intermédiaire d'un dispositif passerelle de connexion dont la fonction est d'adapter les conditions de transmission des informations sur le MULTIBUS II, aux conditions de transmission sur le réseau ou sur la liaison caractéristique reliant les périphériques. En effet, les modes de transmission des données, d'une part sur le bus PSB et d'autre part sur le réseau (par exemple FDDI) sont totalement différents, aussi bien en ce qui concerne le débit de transmission des informations, qu'en ce qui concerne les protocoles de transmission utilisés, les codes d'écriture, les informations, le format, les caractères de commandes, la transmission des informations (en parallèle sur le MULTIBUS II, en série sur le réseau FDDI), etc.

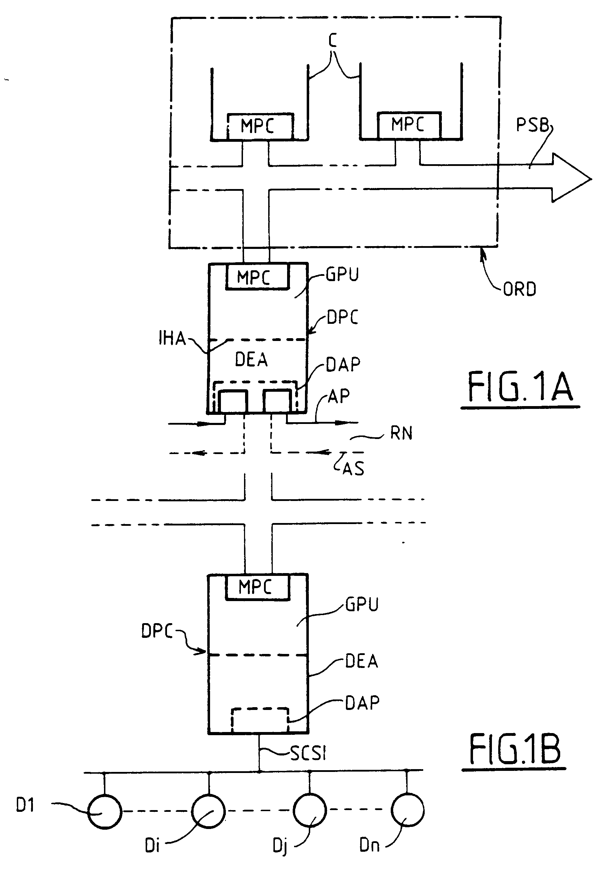

Les Figures 1A et 1B montrent respectivement la structure générale d'un tel dispositif passerelle lorsque le réseau de transmission est de type FDDI, et lorsque la liaison caractéristique est de type SCSI.

On considère la Figure 1A.

Celle-ci montre un ordinateur ORD dont les différents éléments constitutifs sont disposés sur une pluralité de cartes C communicant entre elles par l'intermédiaire d'un bus PSB. Chaque carte C est connectée à PSB par l'intermédiaire d'un coprocesseur MPC fabriqué par exemple par le Société INTEL, et ayant la référence VL 82c389 communiquant par mode message avec les autres éléments constitutifs fonctionnels de l'ordinateur. Ce mode de communication entre les différentes cartes de ORD, est défini de manière précise dans la norme précitée IEEE 1296.

L'ordinateur ORD est connecté à un réseau RN, en forme d'anneau, de type FDDI, par l'intermédiaire du dispositif passerelle de connexion DPC. Le réseau RN se compose d'un anneau principal AP et d'un anneau secondaire AS.

Le dispositif DPC se compose d'une part d'un dispositif universel de couplage GPU (sigle anglais de General Purpose Unit), d'un dispositif adaptateur DEA et d'un interface IHA assurant le transfert des informations entre le dispositif universel de couplage GPU et le dispositif adaptateur DEA.

Le dispositif universel de couplage GPU est relié à PSB par un coprocesseur MPC, du même type que les coprocesseurs des cartes C de l'ordinateur ORD.

Le dispositif DPC est relié physiquement au réseau RN par l'intermédiaire d'un dispositif d'accès physique au réseau, à savoir DAP, appartenant au dispositif adaptateur DEA.

A la figure 1B, le dispositif passerelle de connexion DPC a la même structure qu'à la figure 1A, la différence étant que le dispositif adaptateur DEA est connecté par l'intermédiaire d'un dispositif d'adaptation physique DAP, à une liaison de type SCSI à laquelle sont connectées respectivement les mémoires à disques D₁,...Dᵢ,...Dⱼ,...Dₙ.

Aussi bien en ce qui concerne la figure 1A que la figure 1B, le dispositif DPC peut être réalisé soit sur une seule et même carte, soit sur deux cartes séparées, suivant l'importance des éléments qui composent chacun des constituants de ce dispositif, à savoir, GPU et DEA.

La structure générale du dispositif DPC, telle que montrée aux figures 1A et 1B, ainsi que des modes de réalisation et de fonctionnement des deux éléments le constituant à savoir GPU et DEA sont décrits de manière détaillée dans la demande de brevet français 89 10 156 déposée le 27 juillet 1989 sous le titre "dispositif passerelle de connexion d'un bus d'ordinateur à un réseau fibre optique en forme d'anneau", par la Société demanderesse FR-A-2 650 412 publié le 01.02.1991.

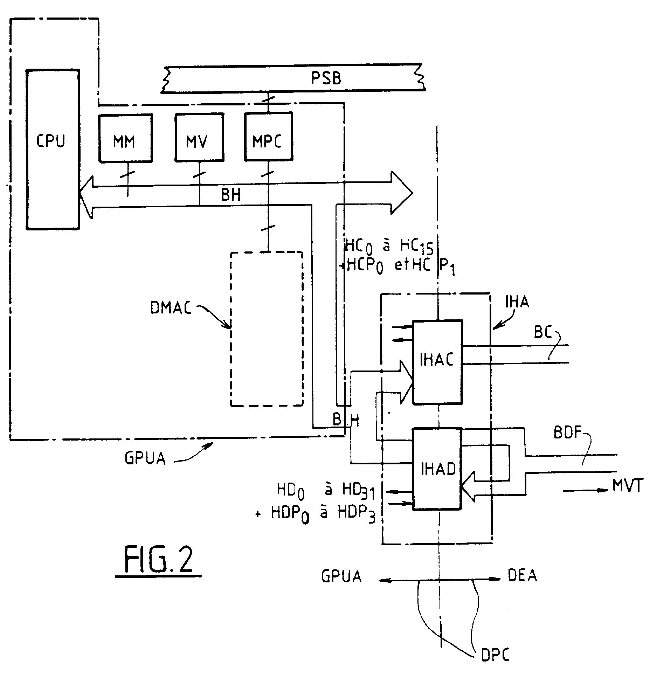

L'invention concernant essentiellement le dispositif universel de couplage GPU, on rappellera en se référant à la figure 2 les éléments constitutifs essentiels du dispositif universel de couplage GPUA utilisés dans le dispositif DPC décrit dans la demande de brevet précitée, qui constitue donc un mode antérieur de réalisation d'un tel dispositif universel de couplage.

Ainsi qu'on peut le voir à cette même figure 2, le dispositif GPUA est construit autour d'un microprocesseur CPU et d'un bus BH associé à ce dernier. Il comprend par ailleurs une mémoire morte programmable MM et une mémoire vive MV, ainsi qu' un contrôleur d'accès direct mémoire de type DMA à la mémoire vive MV, désigné par DMAC.

Par ailleurs, l'interface de transfert IHA connectée au dispositif universel GPUA par l'intermédiaire du bus BH comprend une interface IHAD permettant de transférer les données utiles depuis ou vers GPUA et une interface de transfert pour des blocs de contrôle incluant les caractères de commande des trames reçues ou émises, à savoir IHAC permettant de transférer les blocs de contrôle depuis ou vers GPUA.

Lorsque l'on cherche à envoyer des informations de l'ordinateur ORD vers le réseau RN, via PSB, on procède de la manière suivante :
Ces informations sont transmises par le coprocesseur MPC puis mémorisées dans la mémoire MV, et ensuite analysées par le microprocesseur CPU qui élabore un bloc de contrôle SCB contenant des paramètres relatifs d'une part à la constitution des trames de type FDDI qui sont destinées à être envoyées sur le réseau RN (caractères de commande) et d'autre part, à la nature des opérations à effectuer par DEA. Ces paramètres sont par exemple l'adresse du destinataire des informations, l'adresse de l'expéditeur, la longueur des messages qui sont envoyés, etc..

Dès que CPU a constitué SCB, ce dernier est envoyé ainsi que les données qui lui correspondent, sur le bus BH vers l'interface IHA, SCB étant acheminé vers IHAC, alors que les données sont acheminées vers IHAD. Le bloc de contrôle SCB est par exemple acheminé sur 16 bits, à savoir HC₀ à HC₁₅, accompagné de deux bits de parité HCP₀ et HCP₁. Quant aux données, elles sont acheminées sur 32 bits, à savoir HD₀ à HD₃₁, accompagnées de quatre bits de parité HDP₀ à HDP₃.

Aussi bien les données que le bloc de commande SCB sont stockés provisoirement dans leurs interfaces respectives IHAC et IHAD avant d'être transférés sur les bus BC d'une part et BDF d'autre part, appartenant au dispositif adaptateur DEA.

Il convient de préciser que le transfert des blocs de contrôle et des données sur les deux bus séparés BC et BDF s'effectue indépendamment pour l'un et pour l'autre. La façon dont sont transférées et stockées, avant leur envoi sur le réseau RN, les informations, par le dispositif adaptateur DEA est décrite en détail dans la demande de brevet français précitée.

L'inconvénient du dispositif universel de couplage GPUA est que le microprocesseur n'a à sa disposition qu'un seul et même bus pour effectuer le transfert des données utiles, le transfert des données nécessaires au déroulement de son propre code, et enfin les données nécessaires à la gestion des protocoles utilisés respectivement sur le bus PSB et sur le réseau FDDI. On n'utilise donc pas au mieux les performances du microprocesseur qui sont ainsi limitées par l'existence d'un seul bus.

La présente invention permet de remédier à ces inconvénients en disposant entre l'interface IHAD et le coprocesseur MPC une mémoire vidéo-RAM double port où sont provisoirement stockées les données utiles des trames FDDI (ou SCSI) avant qu'elles ne soient transférées vers le coprocesseur MPC sous le contrôle d'un contrôleur de type DMA. Par ailleurs, le microprocesseur peut utiliser son bus interne spécifiquement pour le déroulement de son code, c'est à dire notamment pour les données nécessaires à son système d'exploitation (Operating system) et enfin pour la gestion des protocoles. On peut donc transférer les données tout en travaillant en même temps sur l'adaptation des protocoles, ou encore en effectuant les opérations du système d'exploitation.

Selon l'invention, le dispositif universel de couplage du type reliant un bus d'ordinateur à un contrôleur d'un groupe de périphériques reliés entre eux par une liaison spécifique d'un réseau auquel le contrôleur est relié physiquement, comprend :
- un microprocesseur associé d'une part par l'intermédiaire de son bus interne à au moins une mémoire contenant son propre système d'exploitation, et d'autre part à une interface spécifique du bus d'ordinateur permettant de le relier à ce dernier ;
- une interface de liaison avec le contrôleur assurant le transfert des données des trames et de blocs de contrôle contenant les caractères de commande relatifs à la constitution de trames transmises soit vers la liaison soit vers le bus d'ordinateur; et
- une mémoire vive tampon à double port connectée par l'intermédiaire d'un premier bus à la dite interface de liaison et par l'intermédiaire d'un second bus au bus d'ordinateur via l'interface spécifique de ce dernier, le transfert des données entre l'interface de liaison et la mémoire double port d'une part, entre celle-ci et le bus d'ordinateur d'autre part, étant organisé par le microprocesseur ce dernier transfert étant effectué sous le contrôle d'un circuit accès direct mémoire connecté au second bus, la transformation des blocs de contrôle spécifiques des protocoles utilisés sur le bus d'ordinateur, en ceux utilisés sur la liaison spécifique et réciproquement étant effectuée par le microprocesseur qui assure leur transfert sur son bus interne vers ou depuis l'interface de liaison.

D'autres caractéristiques et avantages de la présente invention apparaîtront dans la description suivante donnée à titre d'exemple non limitatif et en se référant aux dessins annexés.

Sur ces dessins :
- la Figure 1 composée des figures 1a et 1b montre comment on relie un ordinateur , soit à un réseau de type FDDI, soit à une liaison de type SCSI,
- la Figure 2 montre les différents éléments constitutifs essentiels d'un dispositif universel de couplage selon l'art antérieur, tel que décrit dans la demande de brevet français précitée,
- la Figure 3 montre les différents éléments constitutifs essentiels du dispositif universel de couplage selon l'invention,
- la Figure 4 montre plus en détail comment est constituée la mémoire vidéo-RAM double port et comment elle est reliée d'une part au dispositif adaptateur et d'autre part au coprocesseur lui-même relié au bus MULTIBUS II,
- la Figure 5 montre comment l'on accède aux différentes pages de la mémoire de type RAM associée au microprocesseur du dispositif de couplage selon l'invention,
- la Figure 6 montre quels sont les différents chemins de données possible entre les différents éléments constitutifs du dispositif universel de couplage selon l'invention.

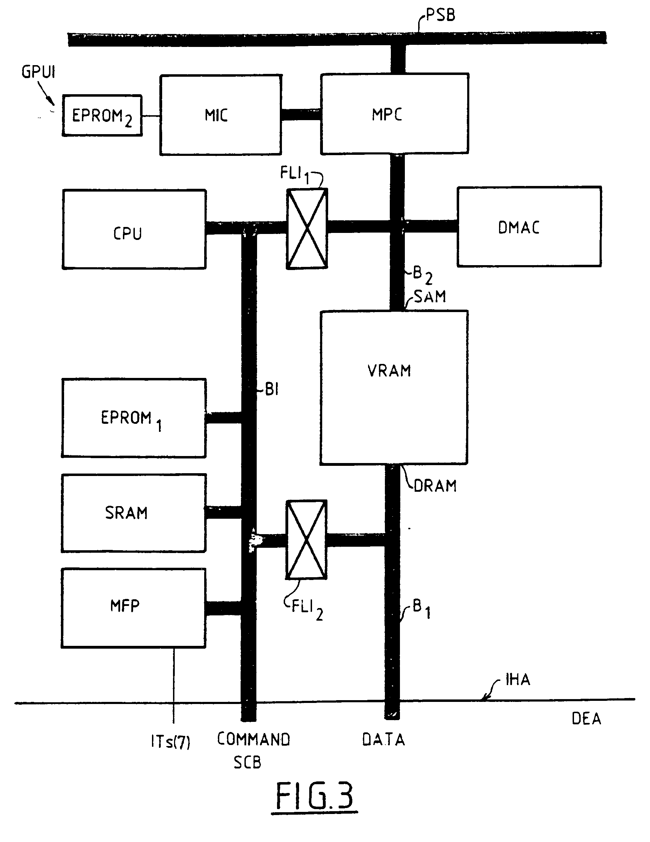

On considère désormais la Figure 3.

Le dispositif universel de couplage selon l'invention GPUI comprend les différents éléments constitutifs essentiels suivants :
- le coprocesseur MPC qui sert d'interface avec le bus de type parallèle PSB,
- le microcontrôleur MIC supportant la fonction d'interconnexion dute "interconnect", du MULTIBUS II,
- le microprocesseur CPU, qui est en fait l'unité centrale du dispositif GPUI, muni de son bus interne BI et associé respectivement à une mémoire programmable effaçable EPROM₁, une mémoire vive SRAM et un gestionnaire d'interruption, à savoir MFP. Les éléments EPROM₁, SRAM, MFP sont tous connectés au bus interne BI du microprocesseur CPU, lequel est connecté par ailleurs à l'interface IHAC,
- la mémoire de type vidéo-RAM, à double port, désignée par VRAM,
- le contrôleur d'accès direct mémoire DMAC connecté au bus B₂ reliant VRAM au coprocesseur MPC,
- le bus B₁ reliant l'interface IHAD à la mémoire VRAM.

A la figure 3, l'interface IHA, strictement identique à celle montrée à la figure 2 est symbolisée par un trait

Le coprocesseur MPC est de même type que celui décrit en relation avec la figure 2 et est donc conçu spécialement pour répondre à la norme IEEE précitée.

Dans l'exemple de réalisation choisi, le microcontrôleur MIC est constitué par un élément de référence 8752 fabriqué par la Société INTEL. Cet élément est conçu par cette dernière de manière à travailler en relation étroite avec le coprocesseur MPC auquel il est relié ainsi qu'on peut le voir à la figure 3.

Il gère tout ce qui est relatif à l'espace "interconnexion" ( "interconnect", en terminologie anglo-saxonne) du MULTIBUS II et tout ce qui est considéré comme servitude MB II, tout cet ensemble (interconnexion + servitudes) étant défini par la norme IEEE 1296 précitée.

Il convient de préciser que MIC peut réaliser l'interconnexion sur demande de son propre microprocesseur CPU ou sur demande du microprocesseur d'une autre carte de type GPUI connectée au même PSB.

La mémoire EPROM₂ associée au microcontrôleur MIC est une mémoire morte effaçable et contient la référence de la carte qui porte GPUI, c'est à dire son numéro tel qu'il est indiqué en usine lors de sa fabrication, et le numéro de révision de celle-ci, c'est à dire le numéro de la version qu'elle représente : en effet la carte portant GPUI peut subir au cours du temps des modifications en fabrication. A chacune de ces modifications correspond une version déterminée dont le numéro est enregistré dans la mémoire EPROM₂. Bien entendu, le microcontrôleur tient compte de ces dernières informations pour mettre en oeuvre son espace d'interconnexion.

Le microprocesseur CPU est, dans l'exemple de réalisation préféré décrit ici, de type 68020 fabriqué par la Firme MOTOROLA. C'est un microprocesseur 32 bits et sa fréquence d'horloge est de 25Mhz. Il gère son bus interne BI qui est un bus non multiplexé de 32 bits de données et de 32 bits d'adresse.

La mémoire morte effaçable EPROM₁ d'une capacité de 128 ou 256 Kilo-octets contient les programmes d'auto-tests et d'initialisation du dispositif de couplage GPUI.

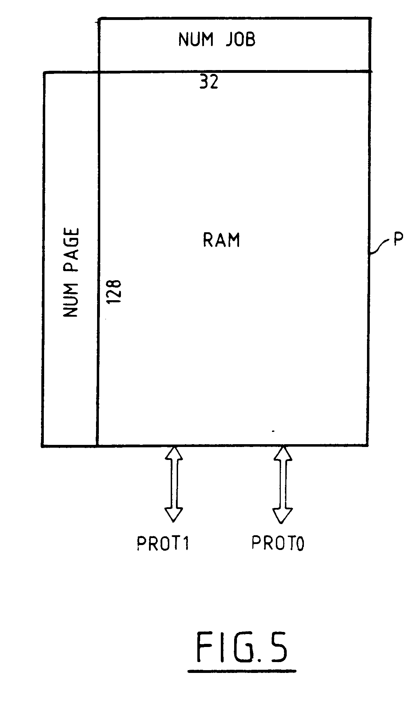

Le système d'exploitation GPOS du microprocesseur CPU est contenu dans la mémoire statique SRAM qui a une capacité pouvant être égale à 512 Kilo-octets ou 1 Méga-octet. Un système de protection est associé à cette mémoire pour en réglementer l'accès et sa description sera faite en relation avec la figure 5.

Le système d'exploitation GPOS (operating system) organise le fonctionnement d'ensemble du microprocesseur et par conséquent supervise le transfert des trames depuis le bus PSB jusqu'à l'interface IHA et réciproquement. Par ailleurs, le (ou les) programme d'adaptation des protocoles utilisés d'une part entre l'ordinateur ORD et le dispositif de couplage via le bus PSB, et d'autre part sur le réseau RN, (FDDI, SCSI, etc..), peut être contenu, soit dans EPROM₁, soit dans SRAM, suivant son (leur) importance et la capacité disponible dans l'une ou l'autre des mémoires.

Le microprocesseur CPU est donc le cerveau du dispositif de couplage : il initialise le transfert des données, réalise l'adaptation des protocoles, exécute son code, et transfère les données entre DEA et l'ordinateur ORD et réciproquement tout en dialoguant avec DEA avec lequel il échange des commandes et des status par exemple de la manière indiquée dans la demande de brevet français précitée.

L'élément MFP ou périphérique multifonction (Sigle anglo-saxon de Multi function peripheral) est un élément dit "périphérique" du microprocesseur CPU. Il est par exemple de type 68901 de la Firme MOTOROLA et est adapté par construction pour ce microprocesseur. Il supporte un certain nombre de fonctions nécessaires au fonctionnement de ce dernier. Il s'agit par exemple d'une partie de la gestion des interruptions qui lui sont nécessaires. Il s'agit également des fréquences d'horloge, par exemple utilisées par le système d'exploitation de ce dernier. Par construction, le microprocesseur de type 68020 a sept niveaux d'interruption, ce qui est insuffisant pour effectuer les opérations dont il a la charge. L'élement MFP fournit en tout 16 niveaux supplémentaires d'interruption dont 8 pour CPU et les 8 autres pour des dispositifs extérieurs dont 7 pour le dispositif adaptateur DEA.

Le contrôleur d'accès direct mémoire DMAC assure les transferts de données entre le coprocesseur MPC et l'une des deux mémoires SRAM ou VRAM. Il possède 2 canaux :
- un canal dit " canal in" assurant le transfert des données depuis le coprocesseur MPC vers la mémoire double accès vidéo-RAM VRAM, (ou vers SRAM),
- un canal dit "canal out" assurant le transfert des données depuis la mémoire VRAM vers le coprocesseur MPC.

Le canal "in" est prioritaire sur le canal "out" et interrompt ce dernier lorsqu'il reçoit une demande de transfert. La vitesse de transfert du contrôleur DMA dépend de la performance recherchée pour le dispositif universel de couplage selon l'invention et peut atteindre 33,3 Mega Bytes/s, en mode simple cycle (Single cycle mode), ce qui permet de saturer le PSB à 32 Méga bytes/s (32 octets)

Le transfert des données s'effectue par paquets successifs de 8 x 32 bits, à la demande tu coprocesseur MPC (aussi bien pour le canal "in" que pour le canal "out"). Pour effectuer un transfert de données, le contrôleur DMAC reçoit de la part du microprocesseur CPU, une adresse de départ (dans la mémoire VRAM , ou dans le coprocesseur MPC), un compte, c'est à dire le nombre d'octets à transférer, et un ordre de départ pour le transfert des données. Dès qu'il a reçu ces informations de la part de CPU, le contrôleur DMAC organise ce transfert des données. Il est donc esclave du microprocesseur CPU, pour les informations donnant l'adresse et le compte. Le contrôleur DMAC ne voit pas les données qui transitent depuis la mémoire vers le coprocesseur et réciproquement. il ne fait que contrôler le cheminement de celles-ci à la demande du coprocesseur MPC.

La mémoire vidéo-RAM VRAM est une mémoire dynamique double port dont la capacité est de l'ordre de 1 à 2 Méga-octets sur une largeur de 32 bits. L'un des deux ports, à savoir SAM est réservé exclusivement au contrôleur DMAC alors que le second port, à savoir DRAM se trouve partagé entre le microprocesseur CPU et le dispositif adaptateur DEA. La vidéo-RAM est protégée par un contrôle de parité avec 1 bit de parité par octet. Cette mémoire sert de tampon pour les données qui transitent entre le dispositif universel de couplage GPUI et le dispositif adaptateur DEA. Il convient de préciser que le microprocesseur CPU ou le dispositif adaptateur DEA peuvent accéder à VRAM pendant que DMAC effectue un transfert de données entre VRAM et MPC. Ceci s'effectue sous certaines conditions : le contrôleur DMAC ne travaille pas directement dans la mémoire vidéo-RAM mais dans un registre qui lui est propre contenant une page de la mémoire, cette dernière étant découpée en plusieurs pages : ainsi, dans l'exemple de réalisation choisi, la mémoire VRAM contient 512 pages de 512 lianes comptant chacune 32 bits. En écriture, DMAC recopie d'abord une page de la mémoire VRAM dans son propre registre, il modifie ensuite son registre avec les données qui lui sont transmises par le coprocesseur, et enfin il recopie son registre dans la dite page mémoire, en écrasant les précédentes données qui y étaient enregistrées. Ceci implique naturellement une gestion très rigoureuse de la mémoire VRAM afin que le microprocesseur CPU et le dispositif adaptateur DEA ne travaillent pas simultanément sur les mêmes pages que DMAC.

Le bus B₁ et le bus B₂ sont des bus sur 32 bits (32 bits adresse, 32 bits données). On voit que le microprocesseur CPU peut contrôler les 3 bus BI, B₁, B₂. Il accède au coprocesseur MPC et aux contrôleurs DMA, DMAC par l'intermédiaire du bus B₂. Il accède à la mémoire VRAM par l'intermédiaire du bus B₁.

Le contrôleur DMAC peut atteindre la mémoire SRAM par l'intermédiaire du bus BI (ceci s'effectuant notamment lors du transfert du code et des données du logiciel GPOS, juste après l'initialisation du dispositif selon l'invention GPUI). Il n'est pas possible d'accéder depuis le dispositif adaptateur DEA, au bus BI depuis le bus B₁. De même, tout transfert de données utiles véhiculées sur le bus B₂ ne peut aller sur BI. Ces deux impossibilités sont symbolisées par l'existence des éléments FLI₁ et FLI₂ disposés respectivement entre les bus B₂ et le bus BI et entre le bus B₁ et BI. Ces éléments sont des éléments d'isolation (ou d'interdiction) logique.

Le contrôleur DMAC est toujours prioritaire sur le microprocesseur CPU, alors que sur le bus B₁, les éléments de contrôle du dispositif adaptateur DEA (se reporter à la demande de brevet français précitée) sont également prioritaires. Toutefois le microprocesseur CPU peut interrompre un transfert sur B₁ ou B₂ lorsque ce transfert est trop long, afin de pouvoir y faire transiter les données qu'il souhaite.

En résumé, on voit que le microprocesseur CPU peut travailler sur son bus pendant que les contrôleurs d'accès direct DMAC et les contrôleurs équivalents de DEA sont actifs sur leurs bus respectifs à savoir B₂ et B₁. Autrement dit, le découpage en trois bus distincts BI, B₁, B₂ permet d'effectuer trois tâches simultanément et de manière totalement asynchrone.

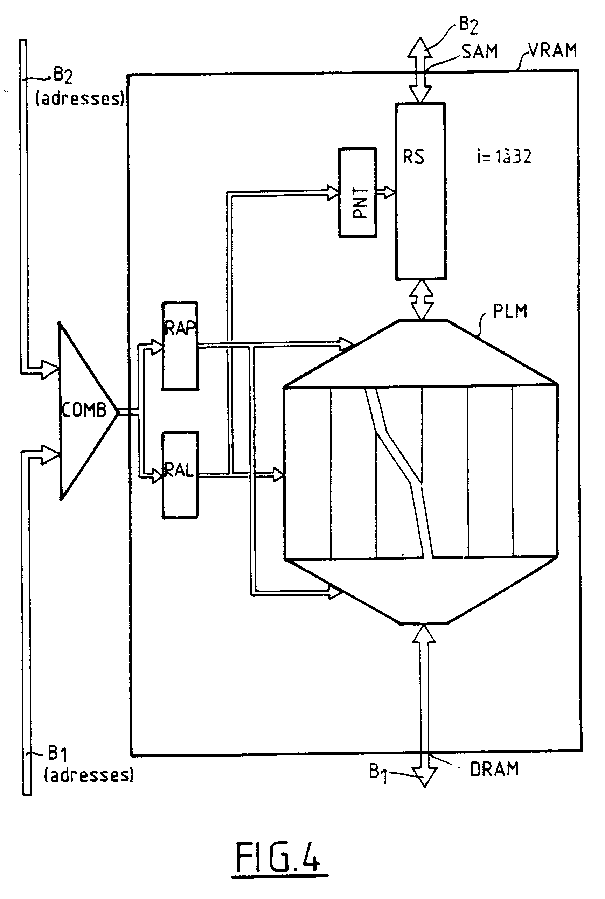

On se reporte désormais à la figure 4.

Les différents éléments constitutifs essentiels de la mémoire double accès VRAM sont :
- la zone mémoire paginée proprement dite, à savoir PLM,
- le registre adresse/ligne RAL,
- le registre adresse/page RAP,
- le registre série de sortie à savoir RS₁, associé au pointeur PNT.

Ainsi qu'il a été dit plus haut le premier port DRAM est connecté au bus E₁ (bus donnée) alors que le second port SAM est connecté au bus donnée B₂.

La zone mémoire paginée PLM est adressée par le registre adresse RAP, en ce qui concerne l'adressage de chacune des 512 pages de PLM, et par le registre d'adresse RAL en ce qui concerne chacune des 512 lignes d'une page déterminée.

Par ailleurs, le registre d'adresse ligne RAL est relié au pointeur PNT.

Le bus d'adresse B₁ et le bus d'adresse B₂ provenant respectivement du dispositif adaptateur DEA et du contrôleur DMAC sont connectés respectivement aux deux registres adresse RAP et RAL par l'intermédiaire d'un circuit de combinaison COMB qui peut être simplement une porte OU.

Le registre série RS qui est relié d'une part au bus de données B₂ et d'autre part à la zone PLM est en fait composé de 32 registres série comprenant chacun 512 positions différentes de manière à ce que l'ensemble du registre RS puisse contenir une page entière de la zone PLM, le pointeur PNT permettant de transférer à la suite les unes des autres, chacune des 512 lignes de 32 bits d'une page de cette même zone mémoire.

De plus amples détails sur la constitution et le fonctionnement d'une mémoire double port de type vidéo-RAM sont par exemple donnés dans la notice technique du constructeur TOSHIBA relative à la mémoire vidéo-RAM de référence TC 524256 par exemple le boîtier de type Z-10-.

On considère désormais la Figure 5, qui montre le système de protection RAMP de la mémoire SRAM, constitué par une mémoire de type RAM. SRAM est découpée par exemple en 128 pages de B Kilo-octets chacune. Par ailleurs, le logiciel d'exploitation GPOS du microprocesseur CPU dispose de 32 numéros d'application (toute application est également appelée JOB). La protection mémoire est contenue dans la mémoire RAMP de 32 x 128 bits, et elle se fait par page et par numéro d'application. Elle se définit par un ensemble de deux bits PROT₁, PROT₂ dont la combinaison définit un certain nombre d'opérations possibles sur telle ou telle page déterminée de la mémoire SRAM. Ainsi, si le bit PROT₁ est égal à zéro quelle que soit la valeur de PROT₀, l'accès à la page ayant un numéro déterminé, par une application déterminée, est impossible. Si le bit PROT₁ est égal à 1 alors que PROT₀ est égal à 0, on peut lire cette même page. Quand les deux bits PROT₁ et PROT₀ sont simultanément égaux à 1, la lecture et l'écriture de la page en question est autorisée.

A chaque application de numéro NUMJOB déterminé, et pour celle-ci à chaque page de numéro NUMPAG, correspond donc un couple de valeurs bien déterminé PROT₁ - PROT₀.

L'ensemble de ces couples NUMJOB -NUMPAG est enregistré dans une table et connu d'un circuit logique matériel (non représenté pour simplifier les figures 3 et 5). Lorsque le système d'exploitation désire accéder à une page de SRAM définie par un couple NUMPAG-NUMJOB déterminé, il envoie à ce circuit logique matériel un couple de valeurs SPROT₁ - SPROT₀ qui est comparé par le dit circuit à PROT₁ -PROT₀. Ce dernier autorise ou non l'accès à la page ne question en fonction du résultat de cette comparaison.

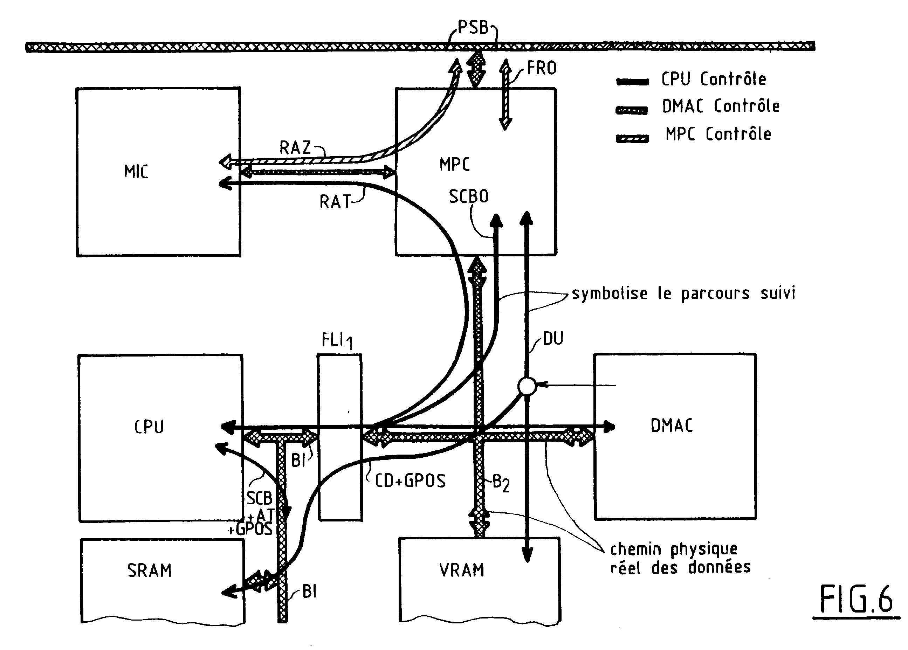

On considère désormais la figure 6, qui résume les différents chemins de données jour chacun des éléments constitutifs essentiels du dispositif universel de couplage selon l'invention.

Il est bien entendu qu'à la figure 6, on entend par chemin de données, les voies par lesquelles transitent n'importe quels types de données, que ce soient les données utiles destinées à être transmises sur le réseau RN de la Fig. 1A, ou encore les blocs de contrôle, ou les données du logiciel d'exploitation GPOS, ou encore les données des programmes d'auto-test.

A la figure 6 on a représenté les chemins de données contrôlés par CPU, DMAC, MPC. Le trait à damier noir et blanc épais représente le chemin physique réel des données (les bus physiques B1, BI) alors que les traits plus minces symbolisent les directions empruntées par ces mêmes chemins de données. On a représenté en trait alterné oblique noir et blanc ceux contrôlés par le coprocesseur MPC et l'on a représenté en trait à damier noir et blanc, ceux contrôlés par le contrôleur DMAC.

On considère les chemins de données contrôlés par CPU : ce sont tout d'abord ceux situés entre ce dernier et sa mémoire SRAM ou sa mémoire EPROM₁ qui transitent par le bus BI et qui concernent soit les blocs de commande SCB, soit les programmes de test AT, soit le système d'exploitation GPOS. CPU contrôle le chemin de données allant vers le microcontrôleur MIC par où transitent les résultats des auto-tests et toutes les données nécessaires à la gestion de l'espace interconnexion de PSB.

Le microprocesseur CPU contrôle le chemin de données entre le coprocesseur MPC et lui-même, transitant par BI, FLI₁ et B₂, concernant les blocs de commande relatifs aux différentes trames provenant de l'ordinateur ORD. Ces blocs de commande désignés ici par SCBO sont différents des blocs de commande SCB. C'est précisément le rôle de CPU de transformer les blocs de commande SCBO en blocs de commande SCB, tenant compte des différents protocoles utilisés entre l'ordinateur ORD et GPUI via PSB d'une part, et sur le réseau RN d'autre part.

On considère les chemins de données contrôlés par le contrôleur DMAC. Il s'agit tout d'abord du chemin de données transportant les données utiles des trames destinées au réseau ou destinées à l'ordinateur ORD, ces données utiles étant désignées par DU et transitant par le bus B₂ (bus données). Par ailleurs, le contrôleur DMAC contrôle un chemin de données transitant d'une part par B₂, puis par FLI₁ , et par BI, et allant dans la mémoire SRAM. Il s'agit de celui Par où transitent les données constituant GPOS.

On considère enfin les chemins de données contrôlés par le coprocesseur MPC. Il s'agit tout d'abord du chemin de données véhiculant les trames provenant de l'ordinateur ORD ou d'un autre ordinateur ou dispositif universel de couplage connecté à PSB désignés par FRO et empruntant PSB. Il s'agit encore du chemin de données transmises par l'ordinateur au microcontrôleur MIC via PSB lors des opérations d'interconnexion et de remise à zéro de chacun des éléments de la carte portant GPUI, et ici désigné par RAZ.

Le fonctionnement du dispositif selon l'invention GPUI est le suivant :

### Opération OP₁ :

Au départ, le microcontrôleur MIC libère le microprocesseur CPU et le laisse démarrer. Ce dernier commence par mettre en oeuvre les programmes d'auto-tests qui sont contenus dans la mémoire EPROM₁. Si les auto-tests se révèlent corrects, le microprocesseur contrôle les opérations d'initialisation de la carte effectuées par le microcontrôleur MIC. Les différents éléments constituant GPUI sont alors dans leur bon état de fonctionnement.

### Opération OP₂ :

Sous la conduite de DMAC, on charge le système d'exploitation GPOS dans la mémoire SRAM. Ceci étant fait, CPU peut le mettre en oeuvre pour contrôler l'ensemble des opérations effectuées par GPUI. Un exemple de réalisation de ce sytème d'exploitation est par exemple décrit dans la demande de brevet français déposée ce jour par la demanderesse sous le titre : " Système d'exploitation pour dispositif universel de couplage d'un bus d'ordinateur à au moins une liaison spécifique d'un réseau". On peut alors passer à l'opération suivante.

### Opération OP₃ :

Elle concerne l'émission ou la réception de trames allant vers ou provenant du réseau.

On considère tout d'abord l'émission, c'est à dire l'envoi d'informations depuis l'ordinateur ORD jusqu'au réseau RN. Dans ce cadre, l'ordinateur est l'initiateur du processus. Il convient de signaler que l'ordinateur possède dans ses mémoires, des zones mémoire, plus communément appelées "buffers", selon la terminologie anglo-saxonne où sont mémorisées avant leur émission les trames destinées à être envoyées sur le réseau RN. De manière courante, l'ordinateur ORD possède plusieurs zones mémoire BF₁, BF₂, etc.., BFₘ. Chacune de ces zones ou buffers correspond généralement à des trames destinées à être envoyées sur un réseau utilisant un protocole donné. Ces trames peuvent être envoyées selon des protocoles Ethernet, TCP-IP, FDDI, etc.. On considérera donc ici, par exemple le buffer BF₁ supposé contenir des trames destinées à un réseau par exemple FDDI.

Les opérations se déroulent alors dans l'ordre suivant :
- 1 : L'ordinateur ORD envoie une interruption IT₁ au microprocesseur CPU, laquelle éveille ce dernier. Cette interruption avertit le microprocesseur que l'ordinateur ORD va émettre une pluralité de trames vers le réseau RN, par exemple n trames. Le dispositif GPUI travaille alors suivant n itérations comportant chacune les opérations 2 à 5 suivantes :
- 2 : Le microprocesseur sous la conduite de son système d'exploitation GPOS, va chercher dans la mémoire de l'ordinateur ORD, l'adresse dans le buffer BF₁ du début de la trame à émettre, et la longueur de celle-ci.
- 3 : Le microprocesseur va alors chercher dans le buffer BF₁ la trame en question, ici dénommée TR₁. Il vient la placer dans la mémoire VRAM, en ce qui concerne les données utiles, et ceci par l'intermédiaire de PSB, du coprocesseur MPC, et grâce au contrôleur DMAC qui organise le transfert de celles-ci depuis le coprocesseur jusqu'à VRAM. Quant aux blocs de commande SCBO, ils sont transmis via PSB, MPC, B₂ et BI dans la mémoire vive SRAM.

Il convient de préciser qu'en ce qui concerne les opérations 2 et 3 effectuées sous le contrôle de GPOS, les informations sont transmises depuis l'ordinateur vers le microprocesseur dans un protocole de transmission qui est spécifique de l'ordinateur en question. Dans l'exemple de réalisation choisie, ce protocole est un protocole dit "PLANET" qui est décrit dans le brevet français n°2 633 414 déposé par la demanderesse ayant pour titre "Système informatique à interconnexion centrale".

On passe ensuite à l'opération 4 :
- 4 : Le microprocesseur CPU effectue l'adaptation des protocoles entre le protocole PLANET et le protocole de type FDDI utilisé sur le réseau RN. Cela revient, à partir des blocs de commande SCBO, à -constituer des blocs de commande SCB, tels que décrit dans la demande de brevet français précitée, et à découper la trame TR₁ en une pluralité de trames FDDI, dont la longueur correspond au format du protocole correspondant.
- 5 : Le microprocesseur CPU charge successivement dans l'interface IHAD, les données utiles et dans IHAC le bloc de commande SCB. Un dialogue s'instaure alors entre CPU et le dispositif adaptateur DEA conformément aux organigrammes décrits dans la demande de brevet français précitée, de manière à faire transiter les trames à travers DEA vers le réseau RN.

On retourne alors à l'opération 2 pour la trame suivante TR₂ destinée à être transmise depuis BF₁ vers le réseau RN.

Lorsque la trame TRₙ est chargée par CPU dans les deux interfaces IHAD et IHAC, s'il n'y a plus de trames à émettre depuis BF₁, le microprocesseur CPU se met, soit au repos, pour ce qui concerne l'émission de trames concernant BF₁, soit commence à organiser l'émission de trames depuis un autre buffer BF₂,...,BFₘ.

### B. Réception de trames :

Là encore, l'ordinateur ORD est l'initiateur des opérations. La réception comporte les opérations suivantes 6 à 11 :
- 6 : l'ordinateur ORD émet une interruption IT₂ qui indique au microprocesseur CPU qu'un buffer BF'₁ est à la disposition de ce dernier pour y ranger des trames provenant du réseau RN. Il est clair, qu'avec une autre interruption, l'ordinateur ORD peut signifier au microprocesseur CPU qu'un buffer BF'₂, BF'₃, etc.. est à sa disposition pour y ranger des trames provenant de réseaux différents de RN. Dans la pratique courante, les deux buffers BF₁ et BF'₁ font partie d'une même zone mémoire qui est en fait divisée en deux, d'une part BF₁ pour l'émission et d'autre part BF'₁ pour la réception de trames.
- 7 : Le microprocesseur CPU redémarre et va chercher dans la mémoire de ORD affectée à cet effet, l'adresse et la longueur du buffer BF'₁ et se met en position d'attente jusqu'à ce que, il recoive une interruption IT₃ reçue du DEA. CPU lit alors le contenu de l'interface IHAC et y constate qu'une trame provenant du réseau RN est disponible pour être reçue par l'ordinateur ORD. Cette trame TR'₁ se situe dans l'interface IHAD.
- 8 : Le microprocesseur CPU vide l'interface IHAD des données utiles qui s'y trouvent et les transfère dans la mémoire VRAM . Il transfère les blocs de commande depuis IHAC vers la mémoire SRAM.
- 9 :
   a) CPU effectue l'ajustement de protocole en transformant le bloc de commande SCB en bloc de commande SCBO.
   b) Il analyse le protocole de la trame reçue, tel que défini dans le bloc de commande SCB pour savoir dans quel type de buffer de la mémoire de l'ordinateur ORD, celle-ci doit aller. Une fois que ceci est effectué, on passe à l'opération 10.
- 10 : CPU effectue le transfert du bloc de commande SCBO vers l'ordinateur ORD via MPC et PSB, et simultanément lance le contrôleur DMAC afin que ce dernier transfère les données utiles de la trame TR'₁ contenues dans la mémoire VRAM vers le buffer BF'₁. Une fois que ce transfert est terminé, on retourne alors soit à l'opération 7 s'il s'agit de recevoir une trame TR'₂ provenant du réseau RN, soit à l'opération 6 s'il s'agit d'une trame provenant d'un autre type de réseau et destiné à un autre buffer que BF'₁.

Bien entendu, l'ordinateur ORD reçoit du microprocesseur CPU un signal lui indiquant qu'une trame va lui parvenir.

Lorsque le microprocesseur a rempli tous les buffers BF'₁, BF'₂,... mis à sa disposition par l'ordinateur ORD, il envoie une interruption IT4 à l'ordinateur ORD. Ceci constitue l'opération 11.

Il convient de préciser que les émissions et réceptions de trames effectuées sous le contrôle du microprocesseur CPU, sont entrelacées dans le temps et que ce dernier peut, dans l'exemple de réalisation préféré décrit ici, gérer 16 canaux logiques entrelacés, c'est à dire 8 canaux logiques pour la réception et 8 canaux logiques pour l'émission, chacun de ces canaux pouvant être affecté à un type de buffer particulier de l'ordinateur ORD.

En conclusion, on voit que le dispositif universel de couplage GPUI selon l'invention, peut effectuer 3 opérations simultanées, à savoir, par l'intermédiaire du contrôleur DMAC, une émission et une réception, sur le bus B₂, alors que le microprocesseur CPU travaille pour une troisième opération (émission ou réception sur un autre canal). Ceci assure une grande performance au dispositif selon l'invention.

## Revendications

1. Dispositif universel de couplage (GPUI) du type reliant un bus d'ordinateur (PSB) à un contrôleur (DEA) d'un groupe de périphériques (D1 à Dn) reliés entre eux par une liaison spécifique (FDDI) d'un réseau (RN) auquel le contrôleur (DEA) est relié physiquement, ledit dispositif comprenant :
- un microprocesseur (CPU) possédant un bus interne (CB) et associé d'une part par l'intermédiaire de son bus interne (BI) à au moins une mémoire (SRAM) contenant son propre système d'exploitation, et d'autre part à une interface spécifique (MPC) du bus d'ordinateur (PSB) permettant de le relier à ce dernier ;
- une interface de liaison (IHA) avec le contrôleur (DEA) assurant le transfert des données des trames et de blocs de contrôle contenant les caractères de commande relatifs à la constitution de trames transmises soit vers la liaison (FDDI), soit vers le bus d'ordinateur (PSB); et
- une mémoire vive tampon à double port (VRAM) connectée par l'intermédiaire d'un premier bus (B₁) à la dite interface de liaison (IHA) et par l'intermédiaire d'un second bus (B₂) au bus d'ordinateur (PSB) via l'interface spécifique (MPC) de ce dernier, le transfert des données entre l'interface de liaison (IHA) et la mémoire double port (VRAM) d'une part, entre celle-ci (VRAM) et le bus d'ordinateur (PSB) d'autre part, étant organisé par le microprocesseur (CPU), ce dernier transfert étant effectué sous le contrôle d'un circuit accès direct mémoire (DMAC) connecté au second bus (B₂), la transformation des blocs de contrôle spécifiques des protocoles utilisés sur le bus d'ordinateur (PSB), en ceux utilisés sur la liaison spécifique (FDDI) et réciproquement étant effectuée par le microprocesseur (CPU) qui assure leur transfert sur son bus interne (BI) vers ou depuis l'interface de liaison (IHA).

2. Dispositif universel de couplage selon la revendication 1, caractérisé en ce que la mémoire à double port (VRAM) comprend une zone mémoire paginée (PLM) comprenant n pages ayant chacune m lignes, un registre adresse/ligne (RAL), un registre adresse/page (RAP), un registre série de sortie (RS) connecté au second bus (B₂), cette connexion constituant le second port, le premier port étant connecté au premier bus (B₁), la zone mémoire paginée (PLM) étant adressée par le registre adresse/page (RAP) pour l'adressage de chacune des n pages et par le registre d'adresse/ligne (RAL) en ce qui concerne chacune des m lignes d'une page déterminée, le premier bus d'adresse (B₁) et le second bus d'adresse (02) étant connecté respectivement aux registres adresse/page (RAP) et adresse/ligne (RAL) par l'intermédiaire d'un circuit de combinaison (COMB), un pointeur (PNT) du registre série (RS) permettant de transférer à la suite les unes des autres, chacune des m lignes d'une page de la zone mémoire paginée (PLM).

3. Dispositif universel de couplage selon l'une des revendications 1 et 2, caractérisé en ce qu'un premier élément d'isolation logique (FLI₂) est disposé entre le premier bus (B₁) et le bus interne (BI) du microprocesseur (CPU) d'une part, et un second élément d'isolation logique (FLI₁) entre le second bus (B₂) et le bus interne (BI) du microprocesseur (CPU), de manière à empêcher tout transfert de données utiles véhiculées sur l'un ou l'autre des premier et second bus (B₁, B₂) vers le bus interne (BI) du microprocesseur (CPU).

4. Dispositif universel de couplage selon l'une des revendications 2 et 3, caractérisé en ce que la mémoire associée (SRAM) comprend un système de protection (RAMP) comportant une mémoire de type RAM et s'effectuant par numéro d'application associé au système d'exploitation du microprocesseur (CPU), et pour chaque numéro d'application par page de la mémoire (SRAM) associée au microprocesseur (CPU), cette protection se définissant par deux bits dont la combinaison définit un certain nombre d'opérations possible sur toute page déterminée de la mémoire associée (SRAM) au microprocesseur (CPU).

5. Dispositif universel de couplage selon l'une des revendications 2 à 4, caractérisé en ce que la mémoire double port (VRAM) est une mémoire de type Vidéo-RAM.

6. Dispositif universel de couplage selon l'une des revendications 3 à 5, caractérisé en ce que :
- le microprocesseur (CPU) contrôle le chemin de données entre l'interface spécifique (MPC) du bus de l'ordinateur (PSB) et lui-même (CPU), transitant par son propre bus interne (BI), le second élément d'isolation logique (FLI₁) et le second bus (B₂), concernant les blocs de commande incluant les caractères de commande relatifs aux différentes trames provenant de l'ordinateur (ORD); et en ce que :
- le contrôleur accès direct mémoire (DMAC) contrôle le chemin de données utiles entre l'interface spécifique (MPC) du bus d'ordinateur (PSB) et la mémoire double port (VRAM) d'une part, et contrôle d'autre part le chemin de données provenant de cet interface spécifique (MPC) et passant par le second bus (B₂), le second élément d'isolation logique (FLI₁) et le bus (BI) pour aller dans la mémoire (SRAM) associée au microprocesseur (CPU), ce dernier chemin étant celui des données constituant le système d'exploitation du microprocesseur (CPU).

7. Procédé de mise en oeuvre du dispositif universel de couplage selon l'une des revendications 1 à 6, caractérisé en ce que pour l'émission de trames vers le réseau (RN), il comprend les opérations successives suivantes :
1) l'ordinateur (ORD) envoie une première interruption (IT₁) au microprocesseur (CPU);
2) le microprocesseur (CPU), sous la conduite de son système d'exploitation (GPOS), va chercher dans une première zone mémoire, dite premier buffer (BF₁) de l'ordinateur (ORD), l'adresse du début de la trame à émettre, et la longueur de celle-ci;
3) le microprocesseur (CPU) va chercher dans ce premier buffer (BF₁) une première trame (TR₁) et vient la placer dans la mémoire à double port (VRAM) pour les données utiles et dans sa propre mémoire associée (SRAM) en ce qui concerne les blocs de commande;
4) le microprocesseur (CPU) effectue l'adaptation des protocoles entre le protocole utilisé pour la transmission de la trame depuis l'ordinateur (ORD) jusqu'au microprocesseur (CPU) via le bus d'ordinateur (PSB) d'une part, et le protocole utilisé sur le réseau (RN) d'autre part;
5) le microprocesseur (CPU) charge les données utiles et les blocs de contrôle provenant respectivement de la mémoire double port (VRAM) et de sa propre mémoire associée (SRAM) dans l'interface de liaison (IHA); les opérations 2) à 5) étant répétées autant de fois qu'il y de trames à émettre.

8. Procédé selon la revendication 7, caractérisé en ce que pour la réception de trames provenant du réseau (RN), il comprend en outre les opérations successives suivantes :
6) l'ordinateur (ORD) émet une seconde interruption (IT₂) qui indique au microprocesseur (CPU) qu'une deuxième zone mémoire, dite deuxième buffer (BF'₁), est à la disposition de ce dernier pour y ranger des trames provenant du réseau (RN) ;
7) le microprocesseur (CPU) va chercher l'adresse et la longueur du deuxième buffer (BF'₁) dans une mémoire de l'ordinateur affectée à cet effet, et se met en position d'attente jusqu'à ce qu'il reçoive une troisième interruption (IT₃) provenant du contrôleur de périphérique (DEA), cette interruption (IT₃) signifiant qu'une trame est disponible dans l'interface de liaison (IHA) pour être reçue par l'ordinateur (ORD);
8) le microprocesseur (CPU) vide l'interface de liaison (IHA) des données utiles qui s'y trouvent ainsi que des blocs de commande et les transfère respectivement dans la mémoire double port (VRAM) et dans sa mémoire associée (SRAM);
9)
a) le microprocesseur (CPU) effectue l'ajustement de protocole entre le protocole utilisé sur le réseau (RN) et celui utilisé sur le bus d'ordinateur (PSB);
b) le microprocesseur (CPU) analyse le protocole de la trame, pour déterminer dans quel type de buffer de la mémoire de l'ordinateur (ORD), la trame doit aller, l'ordinateur (ORD) comportant une pluralité de types de buffer correspondant chacun à un type de réseau déterminé;
10) le microprocesseur (CPU) effectue le transfert du bloc de commande de la trame vers l'ordinateur (ORD) via le bus d'ordinateur (PSB), et simultanément lance le contrôleur d'accès direct mémoire (DMAC) de telle façon que celui-ci transfère les données utiles de la trame vers le deuxième buffer (BF'₁) de l'ordinateur (ORD); le transfert de la trame dans ce deuxième buffer (BF'₁) étant terminé, on retourne alors soit à l'opération 7) s'il s'agit d'une trame provenant du même réseau, soit à l'opération 6) s'il s'agit d'une trame provenant d'un autre type de réseau.

## Claims

1. Universal coupling device (GPUI) of the type connecting a computer bus (PSB) to a controller (DEA) of a group of peripherals (D1 to Dn) connected together by a specific link (FDDI) of a network (RN) to which the controller (DEA) is physically connected, said device comprising:
- a microprocessor (CPU) having an internal bus (BI) and associated on the one hand via its internal bus (BI) to at least one memory (SRAM) containing its own operating system, and on the other hand to a specific interface (MPC) of the computer bus (PSB) making it possible to connect it thereto;
- a linking interface (IHA) with the controller (DEA) ensuring the transfer of the data of the frames and control blocks containing the control characters relating to the constitution of frames transmitted either to the link (FDDI) or to the computer bus (PSB); and
- a dual-port buffer random access memory (VRAM) connected via a first bus (B₁) to said linking interface (IHA) and via a second bus (B₂) to the computer bus (PSB) via the specific interface (MPC) of the latter, the transfer of data between the linking interface (IHA) and the dual-port memory (VRAM) on the one hand, and between said memory (VRAM) and the computer bus (PSB) on the other hand, being organised by the microprocessor (CPU), the latter transfer being effected under the control of a direct memory access circuit (DMAC) connected to the second bus (B₂), the transformation of the specific control blocks of the protocols used on the computer bus (PSB) into those used on the specific link (FDDI) and *vice versa* being effected by the microprocessor (CPU), which ensures their transfer over its internal bus (BI) to or from the linking interface (IHA).

2. Universal coupling device according to Claim 1, characterised in that the dual-port memory (VRAM) comprises a paginated memory zone comprising n pages each having m lines, a line/address register (RAL), a page/address register (RAP), a serial output register (RS) connected to the second bus (B₂), this connection constituting the second port, the first port being connected to the first bus (B₁), the paginated memory zone (PLM) being addressed by the page/address register (RAP) for the addressing of each of the n pages and by the line/address register (RAL) as concerns each of the m lines of a particular page, the first address bus (B₁) and the second address bus (B₂) being connected respectively to the page/address (RAP) and line/address (RAL) registers via a combination circuit (COMB), a pointer (PNT) of the serial register (RS) making it possible to transfer in series, one after another, each of the m lines of a page of the paginated memory zone (PLM).

3. Universal coupling device according to one of Claims 1 and 2, characterised in that a first logical insulation member (FLI₂) is arranged between the first bus (B₁) and the internal bus (BI) of the microprocessor (CPU) on the one hand, and a second logical insulation member (FLI₇) between the second bus (B₂) and the internal bus (BI) of the microprocessor (CPU), so as to prevent any transfer of effective data conveyed over one or other of the first and second buses (B₁, B₂) to the internal bus (BI) of the microprocessor (CPU).

4. Universal coupling device according to one of Claims 2 and 3, characterised in that the associated memory (SRAM) comprises a protection system (RAMP) comprising a RAM-type memory and taking place by application number associated with the operating system of the microprocessor (CPU) and, for each application number, by page of the memory (SRAM) associated with the microprocessor (CPU), this protection being defined by two bits, the combination of which defines a number of operations possible on any given page of the memory (SRAM) associated with the microprocessor (CPU).

5. Universal coupling device according to one of Claims 2 to 4, characterised in that the dual-port memory (VRAM) is a memory of Video-RAM type.

6. Universal coupling device according to one of Claims 3 to 5, characterised in that:
- the microprocessor (CPU) controls the data path between the specific interface (MPC) of the computer bus (PSB) and itself (CPU), transiting by its own internal bus (BI), the second logical insulation member (FLI₁) and the second bus (B₂), concerning the control blocks including the control characters relating to the various frames coming from the computer (ORD); and in that:
- the direct memory access controller (DMAC) controls the effective data path between the specific interface (MPC) of the computer bus (PSB) and the dual-port memory (VRAM) on the one hand and, on the other hand, controls the data path coming from that specific interface (MPC) and passing via the second bus (B₂), the second logical insulation member (FLI₁) and the bus (BI) so as to go to the memory (SRAM) associated with the microprocessor (CPU), the latter path being the one for the data constituting the operating system of the microprocessor (CPU).

7. Method for implementing the universal coupling device according to one of Claims 1 to 6, characterised in that, for the sending of frames to the network (RN), it comprises the following successive operations:
1) the computer (ORD) sends a first interrupt (IT₁) to the microprocessor (CPU);
2) the microprocessor (CPU), driven by its operating system (GPOS), searches in a first memory zone, called first buffer (BF₁) of the computer (ORD), for the address of the start of the frame to be sent, and the length thereof;
3) the microprocessor (CPU) searches in this first buffer (BF₁) for a first frame (TR₁) and places it in the dual-port memory (VRAM), for the effective data, and in its own associated memory (SRAM), as concerns the control blocks;
4) the microprocessor (CPU) effects the adaptation of the protocols between the protocol used for transmitting the frame from the computer (ORD) to the microprocessor (CPU) via the computer bus (PSB) on the one hand, and the protocol used on the network (RN) on the other hand;
5) the microprocessor (CPU) loads the effective data and the control blocks coming respectively from the dual-port memory (VRAM) and from its own associated memory (SRAM) into the linking interface (IHA);
operations 2) to 5) being repeated as many times as there are frames to be sent.

8. Method according to Claim 7, characterised in that, for receiving frames coming from the network (RN), it further comprises the following successive operations:
6) the computer (ORD) issues a second interrupt (IT₂), which indicates to the microprocessor (CPU) that a second memory zone, called second buffer (BF'₁), is available to the latter in order to store therein frames coming from the network (RN);
7) the microprocessor (CPU) searches for the address and length of the second buffer (BF'₁) in a memory of the computer assigned to that purpose, and goes into standby position until it receives a third interrupt (IT₃) coming from the peripheral controller (DEA), this interrupt (IT₃) signifying that a frame is available in the linking interface (IHA) for reception by the computer (ORD);
8) the microprocessor (CPU) empties the linking interface (IHA) of the effective data located therein, together with the control blocks, and transfers them respectively into the dual-port memory (VRAM) and into its associated memory (SRAM);
9)
a) the microprocessor (CPU) effects protocol adjustment between the protocol used on the network (RN) and that used on the computer bus (PSB);
b) the microprocessor (CPU) analyses the protocol of the frame, to determine in which type of buffer of the memory of the computer (ORD) the frame has to go, the computer (ORD) comprising a plurality of types of buffer each corresponding to a particular type of network;
10) the microprocessor (CPU) effects the transfer of the control block of the frame to the computer (ORD) via the computer bus (PSB), and simultaneously launches the direct memory access controller (DMAC) in such a way that said controller transfers the effective data of the frame to the second buffer (BF'₁) of the computer (ORD); the transfer of the frame into this second buffer (BF'₁) being completed, the next step is to return either to operation 7) in the case of a frame coming from the same network, or to operation 6) in the case of a frame coming from another type of network.

## Patentansprüche

1. Universelle Kopplungsvorrichtung (GPUI) des Typs, der einen Rechnerbus (PSB) mit einem Controller (DEA) für eine Gruppe von Peripheriegeräten (D1 bis Dn) verbindet, die untereinander über eine spezifische Verbindung (FDDI) eines Netzes (RN) verbunden sind, mit dem der Controller (DEA) physisch verbunden ist, wobei die Vorrichtung enthält:
- einen Mikroprozessor (CPU), der einen internen Bus (BI) besitzt und dem einerseits über seinen internen Bus (BI) wenigstens ein Speicher (SRAM), der sein Betriebssystem enthält, und andererseits eine spezifische Schnittstelle (MPC) des Rechnerbusses (PSB), die ermöglicht, ihn mit diesem letzteren zu verbinden, zugeordnet sind;
- eine Schnittstelle (IHA) für die Verbindung mit dem Controller (DEA), die die Übertragung von Daten von Rahmen und von Steuerblöcken, die die Steuerzeichen für die Bildung der entweder zur Verbindung (FDDI) oder zum Rechnerbus (PSB) übertragenen Rahmen enthalten, sicherstellt; und
- einen Dualport-Schreib-Lese-Pufferspeicher (VRAM), der über einen ersten Bus (B₁) mit der Verbindungsschnittstelle (IHA) und über einen zweiten Bus (B₂) mit dem Rechnerbus (PSB) über eine spezifische Schnittstelle (MPC) dieses letzteren verbunden ist, wobei die Datenübertragung zwischen der Verbindungsschnittstelle (IHA) und dem Dualport-Speicher (VRAM) einerseits und zwischen diesem (VRAM) und dem Rechnerbus (PSB) andererseits durch den Mikroprozessor (CPU) organisiert wird, wobei diese letztere Übertragung unter der Steuerung einer an den zweiten Bus (B₂) angeschlossenen Direktspeicherzugriffsschaltung (DMAC) erfolgt, wobei die Transformation der für die auf dem Rechnerbus (PSB) verwendeten Protokolle spezifischen Steuerblöcke in jene, die in der spezifischen Verbindung (FDDI) verwendet werden, und umgekehrt, durch den Mikroprozessor (CPU) ausgeführt wird, der ihre Übertragung auf seinem internen Bus (BI) an die Verbindungsschnittstelle (IHA) oder von dieser sicherstellt.

2. Universelle Kopplungsvorrichtung nach Anspruch 1, dadurch gekennzeichnet, daß der Dualport-Speicher (VRAM) eine paginierte Speicherzone (PLM), die n Seiten mit jeweils m Zeilen enthält, ein Zeilenadressenregister (RAL), ein Seitenadressenregister (RAP) und ein serielles Ausgangsregister (RS), das mit dem zweiten Bus (B₂) verbunden ist, enthält, wobei diese Verbindung den zweiten Port bildet, wobei der erste Port mit dem ersten Bus (B₁) verbunden ist, wobei die paginierte Speicherzone (PLM) durch das Seitenadressenregister (RAP) für die Adressierung jeder der n Seiten und durch das Zeilenadressenregister (RAL) bezüglich jeder der m Zeilen einer bestimmten Seite adressiert wird, wobei der erste Adressenbus (B₁) und der zweite Adressenbus (B₂) mit dem Seitenadressenregister (RAP) bzw. mit dem Zeilenadressenregister (RAL) über eine Kombinationsschaltung (COMB) verbunden sind, wobei ein Zeiger (PNT) des seriellen Registers (RS) die Übertragung jeder der m Zeilen einer Seite der paginierten Speicherzone (PLM) nacheinander ermöglicht.

3. Universelle Kopplungsvorrichtung nach einem der Ansprüche 1 und 2, dadurch gekennzeichnet, daß einerseits ein erstes logisches Isolationselement (FLI₂) zwischen dem ersten Bus (B₁) und dem internen Bus (BI) des Mikroprozessors (CPU) angeordnet ist und ein zweites logisches Isolationselement (FLI₁) zwischen dem zweiten Bus (B₂) und dem internen Bus (BI) des Mikroprozessors (CPU) angeordnet ist, so daß jede Übertragung von Nutzdaten, die auf dem einen oder dem anderen der ersten und zweiten Busse (B₁, B₂) zum internen Bus (BI) des Mikroprozessors (CPU) transportiert werden, verhindert wird.

4. Universelle Kopplungsvorrichtung nach einem der Ansprüche 2 und 3, dadurch gekennzeichnet, daß der zugeordnete Speicher (SRAM) ein Schutzsystem (RAMP) aufweist, das einen Speicher des RAM-Typs enthält und durch die dem Betriebssystem des Mikroprozessors (CPU) zugeordnete Anwendungsnummer und für jede Anwendungsnummer pro Seite des dem Mikroprozessor (CPU) zugeordneten Speichers (SRAM) ausgeführt wird, wobei dieser Schutz durch zwei Bits definiert ist, deren Kombination eine bestimmte mögliche Anzahl von Operationen auf der gesamten bestimmten Seite des dem Mikroprozessor (CPU) zugeordneten Speichers (SRAM) definiert.

5. Universelle Kopplungsvorrichtung nach einem der Ansprüche 2 bis 4, dadurch gekennzeichnet, daß der Dualport-Speicher (VRAM) ein Speicher des Typs Video-RAM ist.

6. Universelle Kopplungsvorrichtung nach einem der Ansprüche 3 bis 5, dadurch gekennzeichnet, daß:
- der Mikroprozessor (CPU) den Weg zwischen der spezifischen Schnittstelle (MPC) des Rechnerbusses (PSB) und ihm selbst (CPU) für diejenigen Daten steuert, die sich über seinen internen Bus (BI), das zweite logische Isolationselement (FLI₁) und den zweiten Bus (B₂) bewegen und die Steuerblöcke betreffen, die die auf die verschiedenen vom Rechner (ORD) stammenden Rahmen bezogenen Steuerzeichen enthalten; und daß:
- der Direktspeicherzugriff-Controller (DMAC) einerseits den Weg der Nutzdaten zwischen der spezifischen Schnittstelle (MPC) des Rechnerbusses (PSB) und dem Dualport-Speicher (VRAM) steuert, und andererseits den Weg der Daten steuert, die von dieser spezifischen Schnittstelle (MPC) ausgehen und über den zweiten Bus (B₂), das zweite logische Isolationselement (FLI₁) und den Bus (BI) laufen, um den dem Mikroprozessor (CPU) zugeordneten Speicher (SRAM) zu erreichen, wobei dieser letztere Weg jener der Daten ist, die das Betriebssystem des Mikroprozessors (CPU) bilden.

7. Verfahren zum Betreiben der universellen Kopplungsvorrichtung nach einem der Ansprüche 1 bis 6, dadurch gekennzeichnet, daß es zum Aussenden von Rahmen zum Netz (RN) nacheinander die folgenden Operationen umfaßt:
1) der Rechner (ORD) schickt eine erste Unterbrechung (IT₁) zum Mikroprozessor (CPU);
2) der Mikroprozessor (CPU) sucht unter der Leitung seines Betriebssystems (GPOS) in einer ersten Speicherzone, die erster Puffer (BF₁) des Rechners (ORD) genannt wird, die Anfangsadresse des auszusendenden Rahmens und dessen Länge;
3) der Mikroprozessor (CPU) sucht in diesem ersten Puffer (BF₁) einen ersten Rahmen (TR₁) und ordnet dessen Nutzdaten im Dualport-Speicher (VRAM) an und ordnet dessen Steuerblöcke in seinem zugeordneten Speicher (SRAM) an;
4) der Mikroprozessor (CPU) führt die Anpassung der Protokolle zwischen dem für die Übertragung des Rahmens vom Rechner (ORD) zum Mikroprozessor (CPU) über den Rechnerbus (PSB) verwendeten Protokoll einerseits und dem auf dem Netz (RN) verwendeten Protokoll andererseits aus;
5) der Mikroprozessor (CPU) lädt die Nutzdaten und die Steuerblöcke, die vom Dualport-Speicher (VRAM) bzw. von seinem zugeordneten Speicher (SRAM) stammen, in die Verbindungsschnittstelle (IHA);
wobei die Operationen 2) bis 5) in der Anzahl wiederholt werden, in der auszusendende Rahmen vorhanden sind.

8. Verfahren nach Anspruch 7, dadurch gekennzeichnet, daß es für den Empfang von vom Netz (RN) stammenden Rahmen außerdem nacheinander die folgenden Operationen enthält:
6) der Rechner (ORD) sendet eine zweite Unterbrechung (IT₂) aus, die dem Mikroprozessor (CPU) anzeigt, daß eine zweite Speicherzone, ein sogenannter zweiter Puffer (BF'₁) für diesen letzteren zur Verfügung steht, um darin die vom Netz (RN) stammenden Rahmen anzuordnen;
7) der Mikroprozessor (CPU) sucht die Adresse und die Länge des zweiten Puffers (BF'₁) in einem Speicher des Rechners, der ihm hierzu zugewiesen ist, und versetzt sich in die Wartestellung, bis er eine dritte Unterbrechung (IT₃), die vom Peripheriegerät-Conntroller (DEA) stammt, empfängt, wobei diese Unterbrechung (IT₃) meldet, daß in der Verbindungsschnittstelle (IHA) ein Rahmen verfügbar ist, der vom Rechner (ORD) empfangen werden kann;
8) der Mikroprozessor (CPU) leert die Verbindungsschnittstelle (IHA) von den Nutzdaten, die sich darin befinden, sowie von den Steuerblöcken und überträgt sie an den Dualport-Speicher (VRAM) bzw. an seinen zugeordneten Speicher (SRAM);
9)
a) der Mikroprozessor (CPU) führt die Einstellung des Protokolls zwischen dem auf dem Netz (RN) verwendeten Protokoll und jenem, das auf dem Rechnerbus (PSB) verwendet wird, aus;
b) der Mikroprozessor (CPU) analysiert das Protokoll des Rahmens, um festzustellen, in welchen Puffertyp des Speichers des Rechners (ORD) der Rahmen laufen soll, wobei der Rechner (ORD) mehrere Typen von Puffern enthält, die jeweils einem bestimmten Netztyp entsprechen;
10) der Mikroprozessor (CPU) führt die Übertragung des Steuerblocks des Rahmens zum Rechner (ORD) über den Rechnerbus (PSB) aus und startet gleichzeitig den Speicherdirektzugriff-Controller (DMAC), so daß dieser die Nutzdaten des Rahmens zum zweiten Puffer (BF'₁) des Rechners (ORD) überträgt, wobei nach Beendigung der Übertragung des Rahmens in diesen zweiten Puffer (BF') eine Rückkehr entweder zur Operation 7), falls es sich um einen vom selben Netz stammenden Rahmen handelt, oder zur Operation 6), falls es sich um einen von einem anderen Netztyp stammenden Rahmen handelt, erfolgt.
